# EUROPÄISCHE PATENTANMELDUNG

(11) **EP 2 568 576 A2**
(43) Veröffentlichungstag der Anmeldung: **13.03.2013**
(21) Anmeldenummer: 12183373.5
(22) Anmeldetag: 06.09.2012
(51) Int. Cl.: H02K 1/20, H02K 1/32

(54) **Kühlsystem für eine hochausgenutzte hochtourige rotierende elketrische Synchronmaschine**

(30) Priorität: 06.09.2011 DE 102011053299
(71) Anmelder: Antriebstechnik Katt Hessen GmbH, 34576 Homberg/Efze (DE)
(72) Erfinder: Köhring, Pierre, 01067 Dresden (DE)
(74) Vertreter: Drechsler, Gottfried

(57) **Zusammenfassung**

Die Erfindung betrifft ein Kühlsystem für eine hochausgenutzte hochtourige rotierende elektrische Synchronmaschine, nach dem Oberbegriff des Haupanspruches.

Aufgabe ist es ein Ständerkühlsystem zu schaffen, dass das Kühlmedium so schnell als möglich abführt, eine konstante Temperaturverteilung selbst bei extrem hohen Drehzahlen gewährleistet, wobei sowohl die magnetisch nicht aktiven, Konstruktionsteile als auch die Permanentmagnete nicht zusätzlich erwärmt werden sollen.

Erfindungsgemäß sind Teilblechpakete 2 mit Abstandshaltern 5 und Distanzelementen 6 voneinander beabstandet angeordnet. Im Ständerblechpaket 1 sind axiale Kühlkanäle 7 angeordnet, welche wechselweise als Zuströmkanäle 8 und Abströmkanäle 9 ausgebildet sind. Die Permanentmagnete sind als gewölbte Permanentmagnetschalen 18 ausgebildet und auf der Oberfläche des massiven Läuferkörpers oder Läuferblechpaketes 17 stabartig durchgehend oder stabartig unterbrochen angeordnet. Innen an den Zähnen 19 des Standerblechpakets 1 sind im Nutbereich beidseitig Nutkeilhalter 21 angeordnet, so dass über der Ständerwicklung 12 und dem Deckstreifen und/oder Nutkeil 15 ein wicklungsfreier Nutraum 22 ausgebildet ist, wodurch zwischen den Teilblechpaketen 2 tangentiale Kühlkanäle 11 ausgebildet sind. An der Stelle, wo die Zuströmkanäle 6 angeordnet sind, sind Aussparungen so angeordnet, dass durch diese auf einer Seite Kühlluft zuströmen kann. Auf der gegenüberliegenden Seite sind die Zuströmkanäle 8 verschlossen. Die Abströmkanäle 9 sind auch einseitig verschlossen.. Die Kühlluft strömt durch Eintrittsöffnungen 25 im Lagerschild 4 ein in die axialen Zuströmkanäle 8, d. h. durch die Zuströmkanäle 8 axial ein und wird jeweils in den Teilblechpaketzwischenräumen in die radialen Kühlkanäle 10 in Teilkühlluftströme nach innen aufgeteilt und umgelenkt. Dann strömt die Kühlluft radial bis auf die Oberfläche des Läuferkörpers 17. Auf der Läuferoberfläche wird die Kühlluft axial umgelenkt und durch die tangentialen Kühlkanäle 11 gedrückt. In den radialen Kühlkanälen 10, die mit den Abströmkanälen 9 verbunden sind, wird die Kühlluft wieder nach außen gedrückt und axial umgelenkt und durch die axialen Abströmkanäle 9 nach der anderen Seite nach außen bewegt.

## Beschreibung

Die Erfindung betrifft ein Kühlsystem für eine hochausgenutzte hochtourige rotierende elektrische Synchronmaschine, mit Durchzugskühlung mit einem Ständerblechpaket bestehend aus Teilblechpaketen, wobei die Teilblechpakete mit Leiteinrichtungs- und Abstandshaltersegmenten voneinander beabstandet sind und das Ständerblechpaket mit einem Pressrahmen oder einem Gehäuse versehen ist, wobei axial über den Umfang verteilt Zu- und Abströmkanäle als axiale Kühlkanäle ausgebildet sind mit angeordneten Fremdlüftern insbesondere für Synchronmaschinen mit Permanentmagneterregung.

Für bestimmte spezielle Anwendungsfälle, wie z. B. für Motorenprüfstände werden sehr hochdynamische sowie hochtourige Antriebe benötigt. Solcherart hochdynamische rotierende elektrische Maschinen sind elektrisch hochausgenutzte Elektromotoren, die auf Grund der realisierten hohen Leistungsdichte sich besonders schnell und intensiv erwärmen können. Hochausgenutzte rotierende elektrische Maschinen erfordern zudem einen Läufer mit möglichst geringem Durchmesser, der sich nur bedingt gut kühlen lässt. Deshalb ist es besonders wichtig, dass die aus dem Ständer stammende Wärme nicht noch zur Erwärmung des Läufers beiträgt und die bei hochtourigen Maschinen unvermeidbar auftretenden Wirbelstromverluste aus dem Läufer sicher abgeführt werden. Die Realisierung einer solchen Maschinenausführung bedingt neben einer intensiven Kühlung des Läuferkörpers deshalb auch eine besonders optimale Kühlung des Ständerblechpaketes.

Es ist allgemein bekannt, dass eine intensive Luftkühlung des Läufer- und des Ständerblechpaketes mit Hilfe von axialen Kühlkanälen oder auch mit axialen und radialen Kühlkanälen erreicht werden kann. Dabei sind die Ständer- und Läuferblechpakete in der Regel aus mehreren Teilblechpaketen aufgebaut. Luftgekühlte Ausführungen sind in der EP 0 522 210 A1, der EP 0 118 802 A1 und der DE 43 20 559 A 1 dargestellt. Diese Ausführungen haben allerdings den Nachteil, dass die axialen Kühlkanäle innerhalb des Läufers axiale Strömungsquerschnitte benötigen, die einer Verkleinerung des Läuferdurchmessers entgegenstehen.

Eine weitere mögliche Lösung für eine intensive Kühlung einer hochausgenutzten rotierenden elektrischen Maschine besteht in der Anwendung der Flüssigkeitskühlung entsprechend einer technischen Lösung nach der EP 0 824 287 A1. Diese Lösung ist insgesamt sehr aufwendig und kostenintensiv, weil komplizierte Dichtungselemente für die Realisierung der Flüssigkeitskühlung im rotierenden Läufer eingesetzt werden müssen. Zudem ist es allgemein anerkannt, dass jede Art von Flüssigkeitskühlung konstruktiv aufwendiger und kostenintensiver ist als eine Luftkühlung.

In einer anderen Schrift, der DE 198 24 202 C1, wird eine weitere aus Teilblechpaketen im Ständer und Läufer bestehende Maschine mit Flüssigkeitskühlung vorgeschlagen. Der wesentlichste Nachteil dieser Lösung ist allerdings darin zusehen, dass diese Kühlungsart nur in der konventionellen Einbaulage geeignet ist ihre Wirkung zu entfalten. Zudem führt diese vorgeschlagene Lösung zu einer ungleichmäßigen Kühlung über den Umfang des Läuferkörpers und Ständerblechpaketes betrachtet. Problematisch ist insbesondere die Kühlung des sich drehenden Läufers, da die Flüssigkeit durch die Zentrifugalwirkung nach außen geschleudert wird. Zudem ist die hier beschriebene Ölkühlung weiter trägheitserhöhend.

In der DE 10 2004 013 133 A1 ist eine rotierende elektrische Maschine mit einem Maschinengehäuse und einem zylinderförmigen Blechpaket beschrieben, wo auch im Ständerblechpaket Kühlkanäle in axialer Richtung angeordnet sind und wobei auch eine über dem Umfang des Maschinengehäuses verteilte Kühlluftöffnung in der axialen Mitte des Maschinengehäuses angeordnet ist. Diese kann wahlweise zu einer mittigen Kühlluftabfuhr oder entgegengesetzt auch zu einer Kühlluftzufuhr benutzt werden. Eine intensive Kühlung sowohl des Ständerblechpaketes als auch des Läuferblechpaketes kann mit dieser Ausführung nicht erreicht werden. Hier wird lediglich eine Art verbesserte Oberflächenkühlung des Ständerblechpaketes beschrieben.

Ein intensives Kühlsystem für hochtourige rotierende elektrische Maschinen insbesondere für Drehstrommaschinen mit Fremd- oder Eigenkühlung ist in der DE 100 54 338 C2 aufgezeigt.

Dabei ist sowohl das Läufer- als auch das quadratische Ständerblechpaket jeweils aus mehren Teilblechpaketen aufgebaut. An der Außenkontur eines quadratischen Ständerblechpaketes schließen sich nach außen über die gesamte Länge axial einseitig verschlossene Zu- und Abströmkammern über den Umfang verteilt mit etwa gleichem axialen Querschnitt an. Von einer Zuströmkammer führen radiale Kühlkanäle, die durch die Endbleche der Ständerteilblechpakete axial und durch Leiteinrichtungs- und Abstandshaltersegmente im Rückengebiet des Ständerblechpaketes radial begrenzt sind. Im Nutgebiet des Ständerblechpaketes stellt die Wicklung mit der Nutisolation die radiale Begrenzung dar. Im Bereich der Zähne der Ständerteilblechpakete kann die Kühlluft bis auf und in den Läufer strömen. Die Luft wird durch die Rotation des Läufers zusätzlich verwirbelt, so dass eine intensive Kühlung erreicht wird. Die erwärmte Luft wird in die radial abströmend ausgeführten Kühlkanäle des Ständerblechpaketes gedrückt. Diese Kühlkanäle sind in gleicher Art und Weise wie die Kühlkanäle, durch die, die Luft einströmt, ausgebildet und sind mit den Abströmkammern verbunden. Dabei kühlt diese Luft das Ständerblechpaket intensiv. In den Abströmkammern wird die Kühlluft dabei umgelenkt und strömt durch Öffnungen im Pressrahmen aus dem quadratischen Ständerblechpaket in den Wickelkopfraum und kühlt unter anderem zusätzlich noch die Wickelköpfe dieser rotierenden elektrischen Maschine. Allerdings beinhaltet diese technische Lösung einen relativ aufwendigen Blechschnitt.

In der US 3 171 996 A ist ein Kühlsystem einer aus Teilblechpaketen bestehenden elektrischen Maschine mit Abstandshaltern zur Kühlluftverteilung gezeigt, wo die Kühlluft axial durch die Rotation des Läufers angesaugt wird und dann radial von innen nach außen durch den Läufer und den Ständer austritt. Diese Lösung ist allerdings für hochausgenutzte hochtourige rotierende elektrische Maschinen nicht geeignet, da der Läuferquerschnitt durch die axialen Kühlluftöffnungen größer gewählt werden muss, um eine bestimmte Menge magnetisch aktiven Materials im Läufer anzuordnen, was einer hochtourigen Ausführung entgegenwirkt. Außerdem beruht diese Lösung auf eine bewusste Ausnutzung von erheblichen Druckdifferenzen im inneren dieser Maschine. Die Kühlluft wird dabei radial über im Gehäuse angeordnete Kühlluftöffnungen abgegeben.

Aus der DE 29 53 800 C2 ist eine elektrische Maschine mit einem massiven Rotor gezeigt, wobei nur das Ständerblechpaket aus Teilblechpaketen besteht und in den Teilblechpaketen sektorförmige Kühlkanäle angeordnet sind. Bei dieser technischen Lösung geht es darum, vor allem die Stirnräume dieser Maschine mit kalter nicht erwärmter Kühlluft intensiv zu kühlen. Hierzu sind unter anderem im Luftspalt zwischen Ständer und Läufer besondere zylindrische Zwischenwände erforderlich, wodurch sich zwangsläufig der Luftspalt in der gesamten Maschine vergrößert, was wiederum die elektrische Ausnutzbarkeit weiter verringert. Eine gleichmäßige Kühlung ohne Entstehung eines Temperaturgefälles, über die Läuferlänge betrachtet, ist mit dieser Lösung allerdings nicht möglich. Des Weiteren ist eine Kühlung im Rotorinneren, in den kritischen Bereichen, wo die Verlustwärme bei einem hochausgenutzten Läufer insbesondere entsteht, nicht realisierbar.

Ein Aufbau einer elektrischen Maschine, wo sowohl das Ständer- als auch das Läuferblechpaket intensiv gekühlt werden kann, ist in der DE 103 17 593 A1 beschrieben. Diese Maschine besteht bei einer Ausführungsmöglichkeit aus mittig zweigeteilten Ständer- und Läuferblechpaketen und zentrischer axialer Luftabführung. Dabei kann allerdings der Läufer nicht besonders trägheitsarm und hochausnutzbar ausgebildet werden, da er mit axial durchgehenden Kühlkanälen ausgestattet ist, welche den elektromagnetisch aktiven Läuferquerschnitt unnötig schwächt.

Eine andere Lösung, in der sich auf dem Umfang eines Ständerblechpaketes im Gehäuse einer rotierenden elektrischen Maschine verteilt Abschnitte für die Zufuhr und Abfuhr des Kühlgases einander abwechseln, ist in der DE 23 18 090 B2 beschrieben. Dabei werden allerdings die axialen Zuführkanäle zur Kühlluftzufuhr aus einem System von gegenüber dem Ständerblechpaketrücken beabstandeten Rohren gebildet. Diese Rohre enden in geschlossenen Kammern, d. h. diese Kammern sind nach außerhalb des Ständerblechpaketes geschlossen ausgebildet. Nach innen sind die Kammern mit radialen Kühlschlitzen verbunden, die durch die Aufteilung des Ständerblechpakets in einzelne Teilblechpakete gebildet werden. Diese technische Ausführung erzeugt zwar eine gleichmäßige Temperaturverteilung im gesamten Ständerblechpaket ist aber konstruktiv sehr aufwendig und deshalb kostenintensiv. Zusätzlich wird die Kühlluft ebenfalls mit zur Wicklungskopfkühlung und zur Lagerkühlung genutzt. Ein anderes universelles Kühlsystem ist in der DE 10 2006 049 188 B3 beschrieben. Hierbei handelt es sich ebenfalls um ein Kühlsystem für hochausgenutzte rotierende elektrische Maschinen, mit einem Ständer- und Läuferblechpaket bestehend aus Teilblechpaketen. Dabei besteht das Ständer- und Läuferblechpaket jeweils aus mehren gleichlangen Teilblechpaketen. Die Teilblechpakete sind mit Leiteinrichtungs- und Abstandshaltersegmenten voneinander beabstandet angeordnet. Im Rücken des Ständerblechpaketes sind hier axiale Zuströmkanäle und axiale Abströmkanäle über den Umfang verteilt angeordnet. Die Abströmkanäle sind beidseitig verschlossen ausgeführt. Die Anzahl der nach innen gerichteten Stege der Leiteinrichtungs- und Abstandshaltersegmente ist entsprechend der Anzahl der Zuströmkanäle und Abströmkanäle ausgebildet. Es sind Ständerteilblechpakete mit geschlossenen Kanälen mit Ständerteilblechpaketen mit offenen und geschlossenen Kanälen so kombiniert angeordnet, dass jeweils die geschlossenen Kanalabschnitte fortlaufend Zuströmkanäle und Abströmkanäle bilden. Bei Gehäuseausführung des Kühlsystems sind im Gehäuse an den Stellen des Ständerteilblechpaketes, wo sich die offenen Kanäle befinden, radiale Gehäuseausströmöfmungen angeordnet.

Der Erfindung liegt die Aufgabe zugrunde, ein intensives Ständerkühlsystem für eine rotierende elektrische Maschine, insbesondere für Synchronmaschinen mit Fremd- oder Eigenkühlung und Permanentmagneterregung zu schaffen, dass das erwärmte Kühlmedium so schnell als möglich aus der Maschine abführt, eine konstante Temperaturverteilung über der gesamten Länge der Maschine selbst bei extrem hohen Drehzahlen gewährleistet, wobei sowohl die magnetisch nicht aktiven, Konstruktionsteile, wie die beiden Maschinenlager nicht zusätzlich erwärmt werden sollen als auch eine unnötige Erwärmung der thermisch hoch empfindlichen Permanentmagnete des Läufers zuverlässig vermieden wird und eine rotierende elektrische Maschine mit einer möglichst hohen Luftspaltinduktion ermöglicht.

Die Aufgabe der Erfindung wird durch die Merkmale des 1. Patentanspruchs gelöst. Weitere zweckmäßige Ausgestaltungen der Erfindung sind Gegenstand der rückbezüglichen Unteransprüche.

Bei dem erfindungsgemäßen Kühlsystem für eine hochausgenutzte hochtourige rotierende elektrische Maschine mit oder/ohne Maschinengehäuse mit Fremd- oder Eigenkühlung für Synchronmaschinen mit Permanentmagneterregung besteht das Ständerblechpaket 1, wie bekannt aus zwei oder mehreren Teilblechpaketen 2. Die Teilblechpakete 2 sind mit Abstandshaltern 5 und Distanzelementen 6 voneinander beabstandet angeordnet und mechanisch fest miteinander verbunden. Die Abstandshalter 5 und Distanzelemente 6 können auch als ein Teil ausgeführt werden und zum Beispiel voll geblecht ausgebildet sein. Innen im Ständerblechpaket 1 sind auf einem Kreisring verteilt an sich bekannte axiale Kühlkanäle 7 angeordnet, welche wechselweise als Zuströmkanäle 8 und Abströmkanäle 9 ausgebildet sind. Der Läufer der rotierenden elektrischen Maschine besteht entweder aus einem massiven Läuferkörper 17 oder er besteht aus einer Läuferwelle 16 mit einem darauf angeordneten Läuferblechpaket 17. Auf dem massiven Läuferkörper bzw. auf dem Läuferblechpaket 17 sind Permanentmagnete mechanisch stabil befestigt. Die Permanentmagnete sind als gewölbte Permanentmagnetschalen 18 ausgebildet und auf der Oberfläche des massiven Läuferkörpers oder Läuferblechpaketes 17 stabartig durchgehend oder stabartig unterbrochen angeordnet. Die Permanentmagnetschalen 18 können auch aus mehreren gewölbten oder quaderförmigen einzelnen Permanentmagnetstäben entsprechender Länge zusammengesetzt sein. Zusätzlich sind innen an den Zähnen 19 des Standerblechpakets 1 im Nutbereich beidseitig zusätzliche Nutkeilhalter 21 angeordnet. Diese neuartigen zusätzlichen Nutkeilhalter 21 besitzen einen definierten Abstand zur Öffnung des Ständerblechpakets 1, d. h. zur Oberfläche des Zahnkopfes 20 in Richtung Läuferoberfläche, so dass über der Ständerwicklung 12 und dem Deckstreifen und/oder Nutkeil 15 ein wicklungsfreier Nutraum 22 ausgebildet ist, wodurch zwischen den Teilblechpaketen 2 im Bereich der Ständerwicklung und der Zähne 19 des Ständerblechpaketes jeweils tangentiale Kühlkanäle 11 ausgebildet sind. Über die Länge der einzelnen Teilblechpakete 2 sind die durch den Blechschnitt vorgegebenen axialen Kühlkanäle 7 abwechselnd als axiale Zuströmkanäle 8 und axiale Abströmkanäle 9 über einen mittleren Radius verteilt mit etwa gleichem axialen Querschnitt angeordnet. An der Stelle, wo die Zuströmkanäle 8 angeordnet sind, sind im Pressrahmen Aussparungen so angeordnet, dass durch diese auf einer Seite der elektrischen Maschine Kühlluft zuströmen kann. Auf der gegenüberliegenden Seite sind die Zuströmkanäle verschlossen, entweder dadurch, dass der Pressrahmen an dieser Stelle keine Öffnung besitzt oder die Zuströmkanäle sind am Ende, d. h. auf der anderen Maschinenseite mit Verschlussblechen 23 dichtend verschlossen. Im anderen gegenüberliegenden Pressrahmen sind dagegen an den Stellen Aussparungen angeordnet, an denen die Abströmkanäle 7 in den Teilblechpaketen 2 des Ständerblechpakets 1 angeordnet sind. Die Pressrahmen sind auf der Zuströmseite an den Stellen, wo die Abströmkanäle 9 angeordnet sind, geschlossen oder mit Verschlussblechen 23 dichtend verschlossen. Die Kühlluft strömt bei dem vorliegenden neuartigen Kühlsystem hierbei auf einer Seite der rotierenden elektrischen Maschine durch Eintrittsöffnungen 25 im Lagerschild 4 ein und dann durch den Wickelkopfraum in die axialen Zuströmkanäle 8, d. h. durch die Zuströmkanäle 8 axial ein und wird jeweils in den Teilblechpaketzwischenräumen in die radialen Kühlkanäle 10 in Teilkühlluftströme, welche nach innen strömen, aufgeteilt und umgelenkt. Diese Kühlluft hat zuvor das diesseitige Lager und den Wickelkopf umströmt und damit auch gekühlt. Dann strömt die Kühlluft radial nach innen bis auf die Oberfläche des massiven Läuferkörpers bzw. des Läuferblechpakets 17oder auf die darauf angeordneten Permanentmagnetschalen 18.Auf der Läuferoberfläche wird die Kühlluft axial umgelenkt und durch die tangentialen Kühlkanäle 11 gedrückt. In den radialen Kühlkanälen 10, die mit den Abströmkanälen 9 verbunden sind, wird die Kühlluft nunmehr wieder nach außen gedrückt und an den entsprechenden Stellen axial umgelenkt und durch die axialen Abströmkanäle 9 nach der anderen Seite der elektrischen Maschine axial durch die entsprechenden Aussparungen im Pressrahmen nach außen bewegt, wo sie sowohl den Wickelkopf als auch das zweite Lager der elektrischen Synchronmaschine intensiv kühlt, bevor die Kühlluft die rotierende Synchronmaschine über die Austrittsöffnungen 26 des anderen Lagerschildes 4 nunmehr erwärmt wieder verlässt.

Durch die neuartige Ausbildung des vergrößerten wicklungsfreien Nutraumes 21 entsteht zwischen den Teilblechpaketen 2 im Bereich der radialen Kühlkanäle 10 über der Oberfläche des Läuferkörpers bzw. des Läuferblechpaketes 17 und zwischen der Ständerwicklung 12 ein erheblich vergrößerter tangentialer Kühlkanal 11, dessen Querschnitt in tangentialer Richtung gesehen größer ist, als der bisher bekannte schmale freie Zwischenraum bei bekannten elektrischen Synchronmaschinen an gleicher Stelle. Die Kühlung erfolgt dabei so, dass der jeweilige Kühlmittelstrom d. h. Luftstrom im Inneren der rotierenden elektrischen Synchronmaschine mit Hilfe der Teilblechpakete 2 des Ständerblechpaketes 1 in axiale, radiale und tangentiale Teilkühlluftströme aufgeteilt wird. Die erfindungsgemäße Lösung ermöglicht zum einen eine intensive Kühlung der im Ständerblechpaket 1 angeordneten Ständerwicklung 12 und zum anderen auch eine hocheffektive Kühlung der thermisch hoch empfindlichen Permanentmagnete der Permanentmagnetschalen 18 des Läufers, welche auf der Oberfläche des Läufers mechanisch fest befestigt sind. Des Weiteren ermöglicht die erfindungsgemäße Lösung bei entsprechender Ausführung der Permanentmagnetschalen 18 und des Läuferkörpers auch eine intensive Kühlung des massiven Läuferkörpers oder des Läuferblechpaketes 17, wie sie bei solcherart hochtourig laufenden Maschinen von sehr großem Vorteil ist. Zusätzlich kann hiermit eine ausreichende Kühlung der beidseitigen Wickelköpfe und der beiden Maschinenlager erreicht werden. Zudem wird durch eine größere Magnetlänge des Läufers im Vergleich zur aktiven Ständerlänge eine höhere Luftspaltinduktion erreicht, indem die Permanentmagnetschalen 18 alle stabartig durchgehend über die gesamte Läuferlänge ausgebildet sein können, ohne das durch thermische Probleme die einzelnen Permanentmagnete geschädigt werden.

In einer anderen Variante des neuartigen erfindungsgemäßen Kühlsystems für eine hochausgenutzte hochtourig rotierende elektrische Maschine mit oder/ohne Maschinengehäuse, mit Fremd- oder Eigenkühlung für Synchronmaschinen mit einem Ständerblechpaket 1 bestehend aus Teilblechpaketen 2, wobei die Teilblechpakete 2 mit Abstandshaltern 5 voneinander beabstandet sind und im Ständerblechpaket 1 axiale Kühlkanäle 7 angeordnet sind, welche als Zuströmkanäle 8 und Abströmkanäle 9 ausgebildet sind und mit einem massiven oder geblechten Läuferkörper 17 angeordneten Permanentmagneten, wird der tangentiale Kühlkanal 11 so ausgebildet, dass der wicklungsfreie Nutraum 22 über den Nutkeilhaltern 21 im wesentlichen durch weitere Unterbrechungen in den stabartigen Permanentmagnetschalen 18 im Bereich der radialen Kühlkanäle 10 vergrößert ausgebildet wird, wobei die Unterbrechungen der Permanentmagnete bis auf die Oberfläche des massiven Läuferkörpers 17 bzw. des Läuferblechpaketes 17 ausgebildet sind. Die dabei entstehenden Kreisringnuten bilden zusammen mit dem Zwischenraum, der bis zum Deckstreifen und/oder Nutkeil 15 oder wenn dieser unterteilt ist, bis zur Oberfläche der frei liegenden Ständerwicklung 12 reicht, im Bereich zwischen den Teilblechpaketen 2 den vergrößerten tangentialen Kühlkanal 11. Dieser erstreckt sich dann bis auf den massiven Läuferkörper 17 bzw. auf die Oberfläche des Läuferblechpaketes 17 bzw. bis nahezu auf die Oberfläche der Läuferwelle 16 und hat die gleiche Wirkung wie bereits vorstehend ausführlich beschrieben.

In einer anderen vorteilhaften Ausführung des erfindungsgemäßen Kühlsystems für eine hochausgenutzte hochtourige rotierende elektrische Synchronmaschine, sind die axialen Zwischenräume zwischen den stabartig durchgehend oder stabartig unterbrochen angeordneten Permanentmagnetschalen 18 der Läuferkörper 17 im Pollückenbereich mit geeigneten Materialien (z. B. geeignete Kunstharze) ausgegossen ausgebildet. Durch dieses Ausgießen entsteht eine gleichmäßige glatte zylindrische Läuferoberfläche. Damit kann eine Geräuschminderung während des Betriebes erzielt werden. Das Ausgießen und gegebenenfalls erforderliche, anschließende Bandagieren des Läufers führt zu einer Reduzierung der Luftreibungsverluste und zur Reduzierung des Strömungswiederstandes im Inneren der elektrischen Synchronmaschine. Des Weiteren wird durch diese Ausführung die mechanische Stabilität des Läufers erheblich erhöht, so dass solcherart rotierende elektrische Synchronmaschinen trotzt der hochtourigen Belastung eine sehr lange Lebensdauer besitzen.

Bei einer anderen Variante des erfindungsgemäßen Kühlsystems für eine hochausgenutzte hochtourige rotierende elektrische Synchronmaschine ist zusätzlich auch der wicklungsfreie Raum innerhalb der Nut der Teilblechpakete 2 zwischen den Zähnen 19, d. h. innerhalb des genuteten Bereiches des Standerblechpaketes 1 ausgegossen oder mit axial einschiebbaren Profilen ausgefüllt ausgebildet und fest fixiert. Dabei besitzt diese feste Vergussmasse oder die eingeschobenen und gegen Verrutschen gesicherten Profile eine relative Permeabilität verschieden von ca. 1. Bei einer relativen Permeabilität größer 1 entsteht zusätzlich der Vorteil, dass der Nutschlitz magnetisch kleiner wird, bzw. die nutungsbedingten Einbrüche in der Luftspaltinduktionswelle deutlich kleiner als bisher ausgebildet werden können. Dies bedingt eine durchaus erhebliche Reduzierung der Wirbelstromverluste im Läufer. Dieses Ausgießen der wicklungsfreien Nutraumes 22 in den Teilblechpaketen 2 bzw. die zusätzlich eingebrachten Profile in den freien Nutbereichen der Teilblechpakete 2 führen ebenfalls zu einer Geräuschminderung und zur Reduzierung der Luftreibungsverluste. Im Gegensatz zu im Elektromaschinenbau bislang üblichen magnetischen Nutverschlusskeilen kann bei der erfindungsgemäßen Ausführung durch Ausgießen oder Einschieben eine bessere Formschlüssigkeit erreicht werden, wodurch insbesondere eine gleichmäßig glatte Ständerbohrungsoberfläche entsteht. Zwischen den Teilblechpaketen 2 bleibt der Bereich oberhalb der Ständerwicklung 12 bzw. des Deckstreifens und/oderNutkeiles 15 in Richtung der Oberfläche des Läuferkörpers 17 frei, denn hier sind die tangentialen Kühlkanäle 11 ausgebildet.

In einer speziellen Ausführung des erfindungsgemäßen Kühlsystems, insbesondere bei Fremdkühlung das Ständerblechpaket 1 für eine hochausgenutzte hochtourige rotierende elektrische Synchronmaschine ist die Synchronmaschine konstruktiv so verändert, dass das Ständerblechpaket 1 mittig symmetrisch geteilt ausgeführt ist, wobei auch das neuartige Kühlsystem spiegelsymmetrisch ausgeführt ist. Hierbei sind in der Mitte einer solcherart ausgeführten Synchronmaschine gesonderte Austrittsöffnungen 26 sowohl im Gehäuse oder Gehäuserahmen 3 als auch im Ständerblechpaket 1 angeordnet. In diesem Fall wird die Synchronmaschine von beiden Seiten mit fremderzeugter Kühlluft beaufschlagt, diese strömt beidseitig von außen nach innen und tritt in der Maschinenmitte erwärmt radial durch die Austrittsöffnungen 26 aus. Dabei ist mittig bevorzugt ein gesondertes Trennblech so angeordnet, dass die axialen Kühlkanäle verschlossen sind und nicht über die gesamte Blechpaketlänge der rotierenden Synchronmaschine durchgehend ausgebildet sind.

Es ist auch generell möglich, dass beim neuartigen Kühlsystem für eine hochausgenutzte hochtourige rotierende elektrische Synchronmaschine links und rechts an den Stellen, wo in Richtung des Ständerblechpaketes 1 der Pressrahmen verschlossen ausgeführt ist, oder die Verschlussbleche 23 angeordnet sind, dass an diesen Stellen zusätzliche Öffnungen 24 oder im Querschnitt veränderbare oder verschließbare Öffnungen 24 angeordnet sind. Das ist es zum Beispiel auf einfacher Art und Weise mittels einer auf die Öffnungen 24 abgestimmten drehbar angeordneten und von Außen bedienbaren Lochscheibe möglich, in einer Stellung die Öffnungen vollflächig frei zu lassen, teilweise freizulassen oder in der anderen Stellung die Öffnungen 24 vollständig wahlweise verschließen zu können. Somit lässt sich der Wirkungsgrad vom neuartigen Kühlsystem im jeweiligen Betriebspunkt maximieren, d. h. wenn unter Last weniger Verluste in der rotierenden Maschine entstehen, kann der Leistungsbedarf vom Kühlsystem entsprechend angepasst verringert werden.

Das erfindungsgemäße Kühlsystem soll nachstehend in einem Ausführungsbeispiel an Hand der Figuren 1 bis 7 näher erläutert werden.
- Figur 1: zeigt das Schema der Kühlluftführung zwischen zwei Teilblechpaketen 2 in einer axialen Draufsicht
- Figur 2: zeigt einen Querschnitt durch eine Nut mit dem wicklungsfreien Nutraum 17 und den tangentialen Kühlkanal 11
- Figur 3: zeigt einen Querschnitt durch eine Nut mit dem wicklungsfreien Nutraum 17 anderer Dimensionierung
- Figur 4a: zeigt einen axialen Längsschnitt durch eine rotierende elektrische Maschine mit dem erfindungsgemäßen Kühlsystem in der Ebene eines Zuströmkanals 8
- Figur 4b: zeigt einen axialen Längsschnitt durch eine rotierende elektrische Maschine mit dem erfindungsgemäßen Kühlsystem in der Ebene eines Abströmkanals 9
- Figur 5: zeigt das Schema der Kühlluftführung zwischen zwei Teilblechpaketen 2 mit unterbrochenen Permanentmagnetschalen 13 in zwei weiteren Varianten
- Figur 6: zeigt einen axialen Längsschnitt durch eine rotierende elektrische Maschine mit unterbrochenen Permanentmagnetschalen 13 in zwei Varianten
- Figur 7: zeigt die verschienenen notwendigen und möglichen Blechschnitte innerhalb der Synchronmaschine zusammengeführt in einer Abbildung

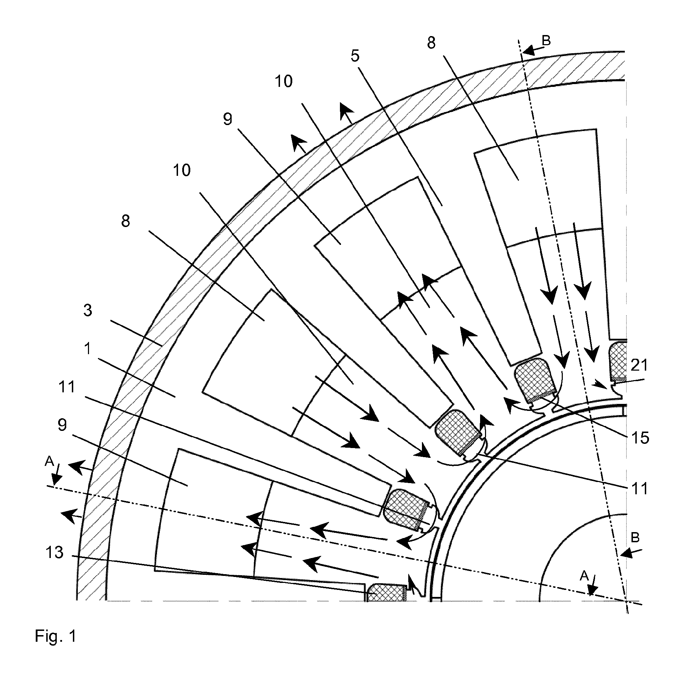

Die Figuren 1 bis 4 zeigen eine bevorzugte Ausführungsform eines erfindungsgemäßen Kühlsystems für eine hochausgenutzte hochtourige rotierende elektrische Synchronmaschine mit Durchzugsbelüftung.

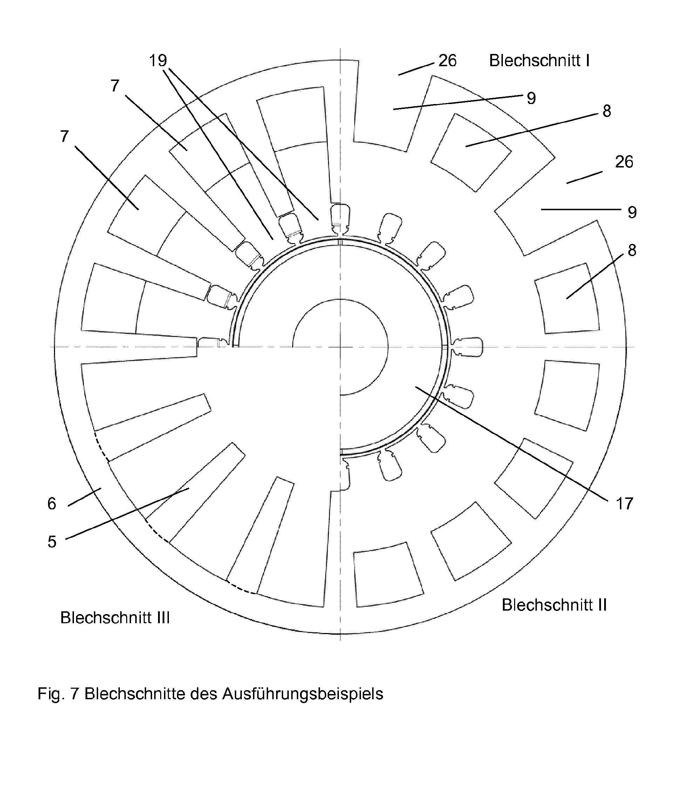

Die Figur 1 zeigt schematisch die prinzipielle Luftführung in den radialen Kühlkanälen 10 zwischen zwei aufeinanderfolgenden Teilblechpaketen 2 eines Ständerblechpaketes 1 in einem Gehäuse 3 aus axialer Sicht von der Zuströmseite der Kühlluft aus betrachtet. Die einzelnen Teilblechpakete 2 sind jeweils von einem Distanzelement 6 im Bleckpaketrücken und von Abstandshaltern 5 im Bereich der Zähne 19 vorrangig aus geschichteten Elektroblechen entsprechend Blechschnitt III (siehe Figur 7) beabstandet. Das Distanzelement 6 und die Abstandshalter 5 zwischen den Zähnen 19 der Teilblechpakete 2 sind hier im Ausführungsbeispiel als einteilige Stanzteile aus mehreren aufeinander geschichteten Einzelblechen ausgeführt. Sie können aber auch aus getrennten Einzelteilen einzeln ausgeführt und zwischen die Teilblechpakte 2 eingebaut sein. Bevorzugt ist die Form der Distanzelemente 6 und der Abstandshalter 5 mit der Form des Blechschnittes der Teilblechpakete 2 identisch. Die Abstandshalter 5 können aber auch verkürzt ausgeführt sein, so dass diese z. b. nicht mit der Oberfläche der Ständerwicklung 12 über der Wicklung abschließen, d. h. sich nicht bist zum Nutgrunddurchmesser der Ständernut 13 hin erstrecken. Die Abstandshalter 5 überspannen in dieser ersten Variante genau eine Nutteilung. Unter der Ständerwicklung 12, welche jeweils pro Ständern 13 mit einem Deckstreifen abgedeckt ist und welche sich an den Nutkeilhaltern 21 abstützen, ist der wicklungsfreie Nutraum 22 im Berech der Teilblechpakete ausgebildet. Zwischen den Teilblechpaketen bilden sich dadurch unter dem Deckstreifen, wenn er durchgehend ausgebildet ist, oder unter der Ständerwicklung zur Oberfläche des Läuferkörpers hin die einzelnen tangentialen Kühlkanäle 11 aus. Die axial in den Zuströmkanälen 8 zuströmende Kühlluft wird in einzelne Teilkühlluftströme aufgeteilt und strömt in den mit den Zuströmkanälen 6 verbundenen radialen Kühlkanälen 10 nach innen bis auf die Oberfläche der Permanentmagnetschalen 19 des sich drehenden Läufers und kühlt diese. Die Kühlluft teilt sich hier tangential in zwei entgegengesetzt gerichtete Strömungen auf, durchströmt die tangentialen Kühlkanäle 11, wird wieder radial nach außen umgelenkt und wird durch die mit den Abströmkanälen verbundenen radialen Kühlkanäle 10 nach außen in die axialen Abströmkanäle 9 geleitet. Durch diese strömt die erwärmte Kühlluft in Richtung der Ausströmseite nach außen. Dabei erfolgt eine intensive Kühlung sowohl der thermisch empfindlichen Permanentmagnetschalen 18 des Läuferkörpers 17 als auch der frei liegenden Ständerwicklung 12 im Bereich zwischen den Teilblechpaketen 2. Sowohl die frische, kühle zugeführte Kühlluft als auch die erwärmte, ausströmende Kühlluft strömt durch das Ständerblechpaket 1 der elektrischen Synchronmaschine in einer Richtung.

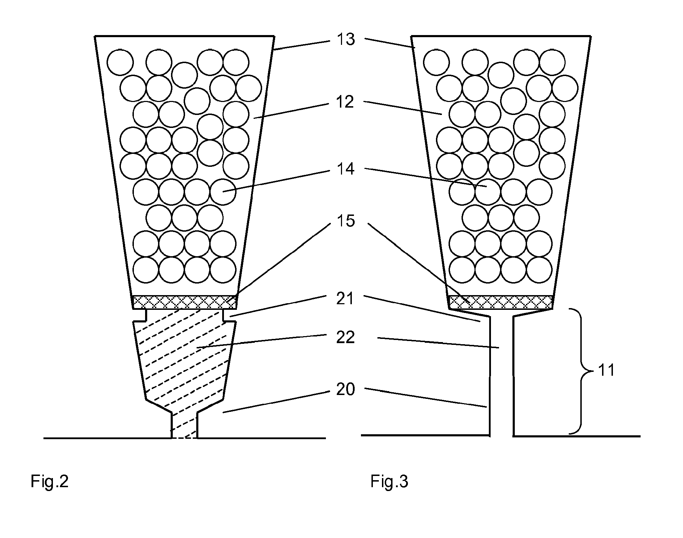

Die Figur 2 zeigt die Detaildarstellung einer z.B. durch Laserstrahlschneiden der Einzelbleche eines Teilblechpaketes 2 hergestellten trapezförmigen Ständernut 13 mit der eingelegten Ständerwicklung 12, welche aus einer bestimmten eingelegten Zahl von Windungen aus Wicklungsdraht 14 besteht, welche in Richtung des massiven Läuferkörpers 17 mit einem Deckstreifen und/oder Nutkeil 15 verschlossen ist. Der Deckstreifen und/oder Nutkeil 15 wird durch einen neuartigen Nutkeilhalter 21 gehalten. Der Nutkeilhalter 21 kann dabei verschieden ausgebildet sein. Zum Beispiel als ein Vorsprung in den Einzelblechen oder als Querschnittsvergrößerung des Zahnkopfes 20 der Einzelbleche. Der Zahnkopf 20 ist so ausgebildet, dass über dem Nutkeilhalter 21 ein wicklungsfreier Nutraum 22 entsteht. Dieser wicklungsfreie Nutraum 22 kann in seiner Form und Größe unterschiedlich dimensioniert sein. In Figur 2 ist ein relativ groß ausgebildeter wicklungsfreie Nutraum 22 (hier ausgegossen) für eine geringe Streureaktanz und in Figur 3 ist ein relativ klein und schmal ausgebildeter wicklungsfreier Nutraum 22 (hier frei gelassen) für eine große Streureaktanz gezeigt. Dadurch wird zwischen den beabstandeten Teilblechpaketen 2 zwischen der Oberfläche der Ständerwicklung 12 und der Oberfläche des Läuferkörpers oder Läuferblechpaketes 17 ein tangentialer Kühlkanal 11 ausgebildet, bzw. wird durch diese begrenzt. Dieser tangentiale Kühlkanal 11 weist einen definierten Strömungsquerschnitt auf, welcher in etwa 1/2 bis zu 2/3 des Querschnitts beträgt, der durch die radialen Kühlkanäle 10 im Bereich der Zähne 19 gegeben ist. Durch diese Anordnung wird die strömende Kühlluft im Teilblechpaketzwischenbereich zwischen den Oberflächen des Läuferkörpers 17 und der Ständerwicklung 12 radial umgelenkt und zusätzlich beschleunigt. Die erhöhte

Strömungsgeschwindigkeit der Kühlluft in diesem Bereich unmittelbar über der Oberfläche des zu kühlenden Läuferkörpers bzw. Läuferblechpaketes führt zu einem besonders hohen Wärmeaustrag in diesem thermisch kritischen Bereich, vor allem aus der hier nicht in einer Ständernut 13 eingebetteten, sondern frei liegenden Ständerwicklung 12 und den Permanentmagnetschalen 18.

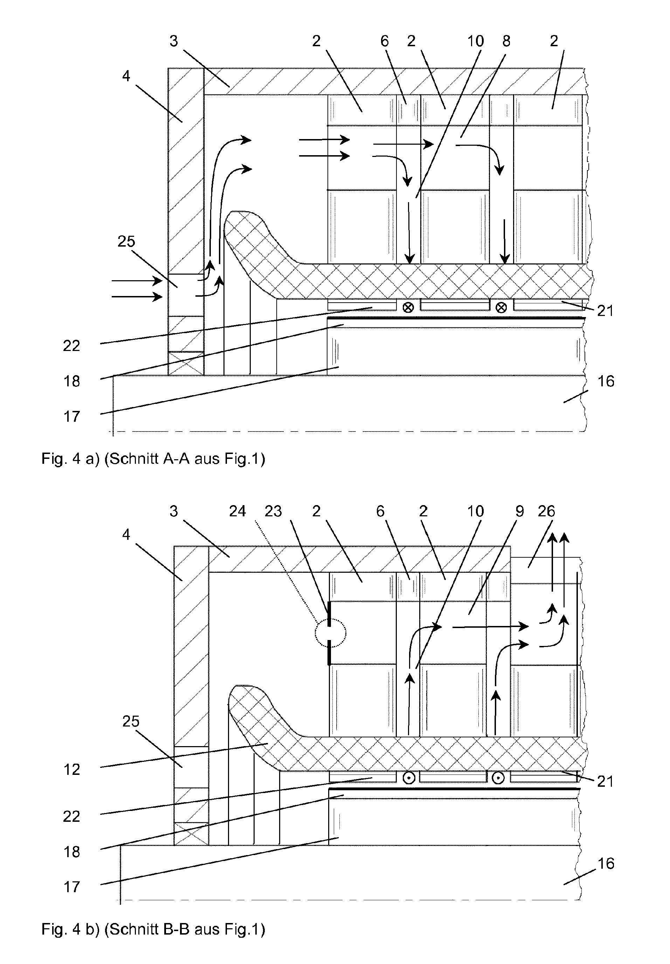

Die Figur 4a zeigt einen Schnitt B -B entlang einer Ständernut 13 (gemäß Figur 1) durch eine erfindungsgemäße Synchronmaschine mit dem Gehäuse oder Gehäuserahmen 3 und dem Ständerblechpaket 1, den axialen Kühlmittelstrom und dessen Aufteilung im axialen Kühlkanal 7, dem Zuströmkanal 8, in einzelne, radial nach innen gerichtete Teilkühlluftströme in den Zwischenräumen zwischen den Teilblechpaketen 2, welche durch die Distanzelemente 6 voneinander jeweils beabstandet angeordnet sind, d. h. die Umlenkung in die radialen Kühlkanäle 10. Die Kühlluft strömt zunächst axial in der Nähe des Lagers, indem die Läuferwelle 16 gelagert ist, durch eine Eintrittsöffnung 25 im Lagerschild 4 in den Wicklungskopfraum ein, umströmt den Wicklungskopf und strömt weiter außen axial in die offenen Zuströmkanäle 8 ein. Dann wird die Kühlluft in eine Vielzahl von einzelne radiale Teilkühlluftströme in den Zwischenräumen zwischen den Teilblechpaketen 2 aufgeteilt, strömt durch die einzelnen radialen Kühlkanäle 10 nach innen, zwischen den Strängen der Ständerwicklung 12 hindurch bis auf die Oberfläche des massiven Läuferkörpers bzw. Läuferblechpaketes 17, auf welchem die Permanentmagnetschalen 18 befestigt sind. Jetzt werden die Teilkühlluftströme aufgeteilt und tangential umgelenkt und durch die tangentialen Kühlkanäle 11 beschleunigt. Die Ständerwicklung 12 wird mittels der Deckstreifen 15 (nicht gezeichnet) die sich gegen die Nutkeilhalter 21 abstützen in den Ständernuten 13 gehalten. Zwischen der Oberfläche des Deckstreifens 15 und der Oberfläche der Permanentmagnetschalen 18 des Läuferkörpers 17 ist in den einzelnen Teilblechpaketen 2 der wicklungsfreie Nutraum 22 ausgebildet. Durch diesen angeordneten wicklungsfreien Nutraum 22 ist auch im Bereich zwischen den Teilblechpaketen 2 ein genügend großer Raum zwischen Standerwicklung 12 und Permanentmagnetschalen 18 ausgebildet, welcher die tangentialen Kühlkanäle 11 bildet. In diesen tangentialen Kühlkanälen 11 ist in der Figur 4a allerdings nur eine Richtungskomponente des sich ausbildenden tangentialen Kühlluftstromes dargestellt.

Die Figur 4b zeigt einen Schnitt A - A entlang einer in Umfangsrichtung betrachtet gegenüber Figur 4a folgenden Ständernut 13 und die nunmehr von der Oberfläche der Permanentmagnetschalen 18 des Läuferkörpers 17 weg, radial nach außen gerichteten Teilkühlmittelströme. Diese Vielzahl von einzelnen erwärmten Teilkühlluftströmen wird mittels der radialen Kühlkanäle 10 im Abströmkanal 9 wieder zusammenführt. Der Abströmkanal 9 ist auf der Zuströmseite mit einem Verschlussblech 23 bevorzugt verschlossenen. Prinzipiell kann aber zusätzlich in jedem Verschlussblech 23 für die Abströmkanäle auf der Zuströmseite auch eine weitere verschließbare Öffnung 24 angeordnet sein, so dass bei Bedarf auch im ersten Teilblechpaket der Abströmkanal 9 von einem geringen Kühlluftstrom durchströmt werden kann. Die erwärmte und zusammengeführte Kühlluft kann entsprechend dieser Ausführung bereits in der Mitte der Synchronmaschinen abgeführt werden, da hier in Maschinenmitte im Ständerblechpaket 1 aus den Abströmkanälen 9 heraus entsprechend angeordnete Austrittsöffnungen 26 vorgesehen sind, welche auch im Gehäuse oder Gehäuserahmen 3 angeordnet sind. Das Kühlsystem ist dabei symmetrisch zur Maschinenmitte hin aufgebaut und verfügt auf jeder Seite über eine Kühlluftzuführung. Das Kühlmittel strömt beidseitig axial ein und wird durch radiale Austrittsöffnungen 26 im Ständerblechpaket 1 und im Gehäuse 3 im mittleren Teilblechpaket 2 der Synchronmaschine wieder an die Umgebung abgegeben. Eine Trennung der beiden symmetrischen Maschinenhälften mittels eines geschlossen ausgebildeten Trennbleches kann, aber muss nicht ausgeführt sein. Der Blechschnitt I besitzt wie in Figur 7 gezeigt die Austrittsöffnungen 26 an seinem Umfang im mittigen Teilblechpaket 2. Der Blechschnitt III aus Figur 7 bildet das Distanzelement 6 und die Abstandshalter 5 derart ab, so dass jeweils eine Nutteilung von ihm umschlossen wird. Es liegt somit an jeder Nut ein Abstandshalter 5 nahezu an. Hierdurch wird eine sehr homogene Temperaturverteilung über die gesamte Länge, nicht nur des Ständerblechpaketes 1, sondern innerhalb der gesamten elektrischen Synchronmaschine erreicht.

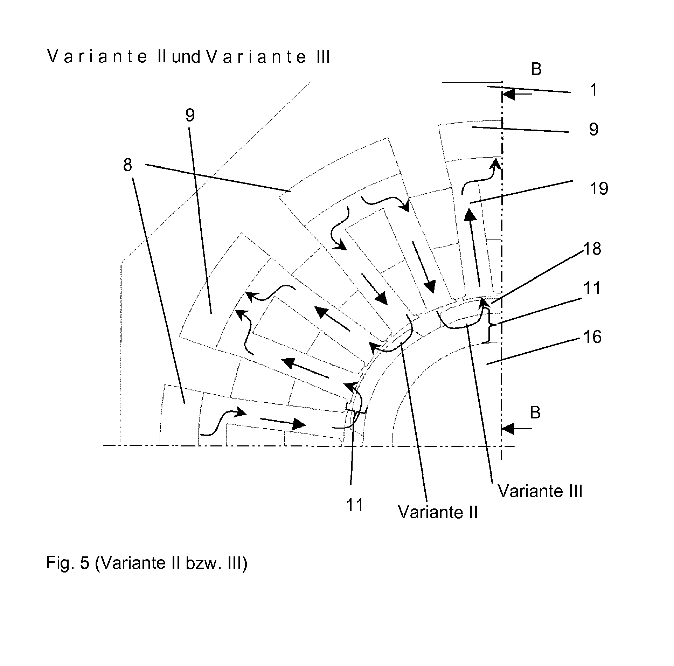

In Figur 5 ist das Schema der Kühlluftführung zwischen zwei Teilblechpaketen 2 eines Ständerblechpaketes 1 mit jeweils unterbrochenen Permanentmagnetschalen 18 gezeigt. Hier sind als Draufsicht die wechselweisen Anordnungen und Aufeinanderfolgen von Zuströmkanälen 8 und Abströmkanälen 9 auf einem Kreisring und die komplette zwangsweise Führung der Vielzahl der Teilkühlluftströme in den radialen Kühlkanälen 10 im Zwischenraum zwischen zwei Teilblechpaketen 2 dargestellt. In Variante II ist eine Ausführungsform mit unterbrochenen Permanentmagnetschalen 18 abgebildet. In Variante III ist eine besondere Ausführung jeweils sowohl mit unterbrochenen Permanentmagnetschalen 18 als auch mit bis nahezu auf die Läuferwelle 16 geöffneten Läuferkörper 17 dargestellt. Die ringförmige Ausnehmung im massiven Läuferkörper 17 kann z. B. mittels eines Einstichwerkzeuges aus dem massiven Läuferkörper 17 ausgedreht werden. Bei einzelnen getrennten Läuferteilblechpaketen 17 werden dann die einzelnen Läuferteilblechpakete von einem über der Läuferwelle 16 angeordneten Distanzring voneinander beabstandet. Die Teilkühlluftströme strömen zunächst radial, aus den Zuströmkanälen 8 kommend nach innen, werden über der Oberfläche des Läuferkörpers 17 tangential in entgegengesetzte Richtungen abgelenkt und strömen in den folgenden um zwei Nuten versetzten radialen Kühlkanal 10 wieder nach außen in die Abströmkanäle 9. Der Abstandshalter 5 überspannt bei diesen beiden besonders ausgebildeten Varianten II und III jeweils zwei Nutteilungen. Die Wirkungen sind die gleichen wie vorstehend beschrieben. Als Vorteil für diese Varianten II und III können eine technologisch einfachere Ausführbarkeit des Ständerblechpaketes 1 und kürzere Schnittkantenlängen genannt werden. In dieser Figur 5 sind die Nutkeilhalter 21 und der wicklungsfreie Nutraum 22 der Übersichtlichkeit halber nicht gezeichnet. Ein radialer Kühlkanal 10 umfasst hier bei diesen Varianten II und III jeweils den Bereich von zwei Zähnen 19 während er in der Variante 1 nur den Bereich eines einzigen Zahnes 19 umfasst.

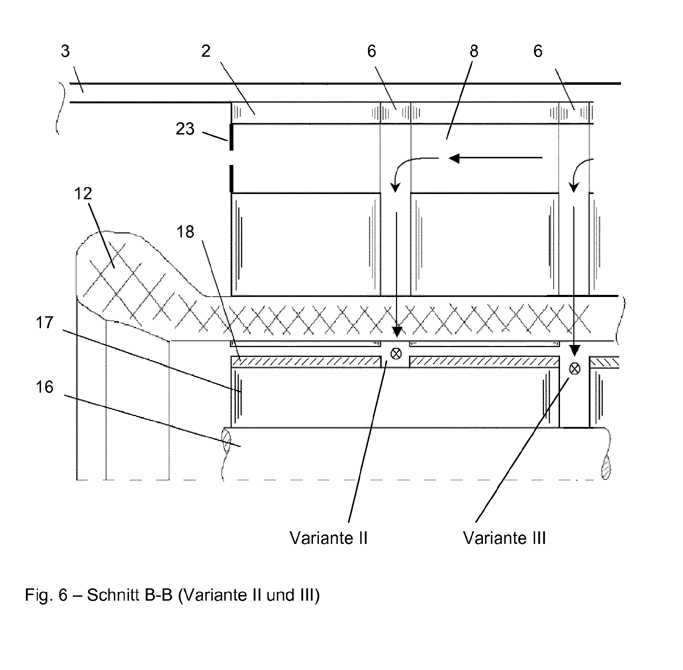

Figur 6 zeigt einen axialen Längsschnitt B-B der durch eine rotierende elektrische Synchronmaschine mit unterbrochenen Permanentmagnetschalen 13 gemäß Variante II und bis auf die Läuferwelle 16 geöffneten massiven Läuferkörper 17 gemäß Variante III.. Hier ist zusätzlich im Zuströmkanal 8 ein Verschlussblech 23 mit einer Öffnung im Verschlussblech 24 gezeigt, durch die ein bestimmter Teilstrom austreten kann, wodurch auch das letzte Teilblechpaket 2 im Zuströmkanal 8 noch von einem Restteilkühlluftstrom durchströmt werden kann. Die Ständerwicklung 1 ist wie vorstehend beschrieben ausgeführt und im Ständerblechpaket 1, das in einem Gehäuse 3 montiert ist, eingebaut.

Figur 7 zeigt eine Zusammenstellung der notwendigen und möglichen Ausführungsformen der Blechschnitte I bis III der betreffenden rotierenden Synchronmaschine höchster Leistungsdichte mit dem Läuferkörper 17 und mit den im Blechschnitt angeordneten Aussparungen für die axialen Kühlkanäle 7 und die Ausformung der einzelnen Zähne 19 des Ständerblechpaketes 1. Im zweiten Quadranten ist die Zusammenstellung der Blechschnitte II und III abgebildet. Im Quadranten drei ist noch einmal die Zusammenstellung eines Distanzelementes 6 und der Abstandshalter 5 dargestellt. Im Quadrant eins ist der Blechschnitt I für das Teilblechpaket 2, welches in der Mitte einer symmetrisch ausgebildeten elektrischen Maschine angeordnet ist, mit den axialen Zuströmkanälen 8 und den Abströmkanälen 9 gezeigt, wobei iin den Abströmkanälen 9 die Austrittsöffnungen 26 angeordnet sind, d. h. die Abströmkanäle 9 sind im Blechpaketrücken geöffnet und die Abführung der Kühlluft erfolgt radial durch in der Maschinenmitte angeordneten Austrittsöffnungen durch das Gehäuse 3 radial nach außen. Die einzelnen andren Teilblechpakete 2 werden aus dem Blechschnitt II aus Figur 7 so in der Form geschichtet, dass durch ein Passelement (z. B. Kerbstift, Passfeder o.ä.) eine Deckungsgleichheit jeweils zu den Blechschnitten I und III erreicht wird.

### Bezugszeichenliste

- 1: Ständerblechpaket
- 2: Teilblechpaket
- 3: Gehäuse oder Gehäuserahmen
- 4: Lagerschild
- 5: Abstandshalter
- 6: Distanzelement
- 7: axiale Kühlkanäle
- 8: Zuströmkanal
- 9: Abströmkanal
- 10: radialer Kühlkanal
- 11: tangentialer Kühlkanal
- 12: Ständerwicklung
- 13: Ständernut
- 14: Wicklungsdraht
- 15: Deckstreifen und/oder Nutkeil
- 16: Läuferwelle
- 17: massiver oder geblechter Läuferkörper
- 18: Permanentmagnetschale
- 19: Zahn
- 20: Zahnkopf
- 21: Nutkeilhalter
- 22: wicklungsfreier Nutraum
- 23: Verschlussblech
- 24: Öffnung im Verschlussblech oder im Pressrahmen
- 25: Eintrittsöffnung
- 26: Austrittsöffnung

## Patentansprüche

1. Kühlsystem für eine hochausgenutzte hochtourige rotierende elektrische Maschine mit oder/ohne Maschinengehäuse, mit Fremd- oder Eigenkühlung,
für Synchronmaschinen mit einem Ständerblechpaket (1) bestehend aus Teilblechpaketen (2), wobei die Teilblechpakete (2) mit Abstandshaltern (4) voneinander beabstandet sind und im Ständerblechpaket (1) axiale Kühlkanäle (7) angeordnet sind, welche als Zuström- (8) und Abströmkanäle (9) ausgebildet sind
und mit einem massiven oder geblechten Läuferkörper (17)
und auf dem Läuferkörper angeordneten Permanentmagneten,
**dadurch gekennzeichnet,**
**dass** die Permanentmagnete als Permanentmagnetschalen (18) auf der Oberfläche eines massiven oder geblechten Läuferkörpers (17) stabartig durchgehend oder stabartig unterbrochen angeordnet sind,
**dass** innen an den Zähnen (19) des Ständerblechpakets (1) im Bereich der Ständernut (13) beidseitig zusätzliche Nutkeilhalter (21) angeordnet sind,
wobei die Nutkeilhalter (21) einen definierten Abstand zum Zahnkopf (20) besitzen,
so dass über der Ständerwicklung (12) ein wicklungsfreier Nutraum (22) ausgebildet ist, wodurch zwischen den Teilblechpaketen (2) ein tangentialer Kühlkanal (11) ausgebildet ist, dass über die Länge der einzelnen Teilblechpakete (2) axiale Zuströmkanäle (8) und Abströmkanäle (9) über einen mittleren Radius verteilt mit etwa gleichem axialen Querschnitt angeordnet sind, wobei diese Zuströmkanäle(8) und Abströmkanäle (9) einseitig oder mittig verschlossen ausgebildet sind.

2. Kühlsystem für eine hochausgenutzte hochtourige rotierende elektrische Maschine mit oder/ohne Maschinengehäuse, mit Fremd- oder Eigenkühlung,
für Synchronmaschinen mit einem Ständerblechpaket (1) bestehend aus Teilblechpaketen (2), wobei die Teilblechpakete (2) mit Abstandshaltern (4) voneinander beabstandet sind und im Ständerblechpaket (1) axiale Kühlkanäle (7) angeordnet sind, welche als Zuström- (8) und Abströmkanäle (9) ausgebildet sind
und mit einem massiven oder geblechten Läuferkörper (17)
und auf dem Läuferkörper angeordneten Permanentmagneten,
**dadurch gekennzeichnet,**
**dass** die Permanentmagnete als Permanentmagnetschalen (18) auf der Oberfläche eines massiven oder geblechten Läuferkörpers (17) stabartig unterbrochen angeordnet sind,
wobei die Unterbrechungen im Bereich der radialen Kühlkanäle (10) angeordnet sind,
so dass über der Ständerwicklung (12) ein wicklungsfreier Nutraum (22) ausgebildet ist,
der sich bis auf den Läuferkörper (17) oder die Läuferwelle (16) erstreckt,
wodurch zwischen den Teilblechpaketen (2) und den Permanentmagnetschalen (18) ein tangentialer Kühlkanal (11) ausgebildet ist,
**dass** über die Länge der einzelnen Teilblechpakete (2) axiale Zuströmkanäle (8) und Abströmkanäle (9) über einen mittleren Radius verteilt mit etwa gleichem axialen Querschnitt angeordnet sind, wobei diese Zuströmkanäle(8) und Abströmkanäle (9) einseitig mit Verschlussblechen (23) oder mittig verschlossen ausgebildet sind..

3. Kühlsystem für eine hochausgenutzte hochtourige rotierende elektrische Maschine, nach Anspruch 1 oder 2,
**dadurch gekennzeichnet,**
**dass** die axialen Zwischenräume zwischen den stabartig durchgehend oder stabartig unterbrochen angeordneten Permanentmagnetschalen (18) der Läuferkörper (17) im Pollückenbereich ausgegossen ausgebildet sind.

4. Kühlsystem für eine hochausgenutzte hochtourige rotierende elektrische Maschine nach Anspruch 1 oder 2,
**dadurch gekennzeichnet,**
**dass** der wicklungsfreie Nutraum (22) der Teilblechpakete (2) zwischen den Zähnen (19) des Standerblechpaketes (1) ausgegossen oder mit axial einschiebbaren Profilen ausgefüllt ausgebildet ist, wobei diese Vergussmassen oder die Profile eine relative Permeabilität verschieden von ca. 1 aufweisen.

5. Kühlsystem für eine hochausgenutzte hochtourige rotierende elektrische Maschine nach Anspruch 1 oder 2,
**dadurch gekennzeichnet,**
**dass** das Ständerblechpaket (1) mittig symmetrisch geteilt ausgeführt ist und das Kühlsystem spiegelsymmetrisch ausgebildet ist.

6. Kühlsystem für eine hochausgenutzte hochtourige rotierende elektrische Maschine nach Anspruch 1 oder 2,
**dadurch gekennzeichnet,**
**dass** die Breite der axialen Kühlkanäle (7) das 0,25 bis 1,5 fache der Breite des Zahnes (19) des Ständerblechpaketes (1) betragen.

7. Kühlsystem für eine hochausgenutzte hochtourige rotierende elektrische Maschine nach Anspruch 5,
**dadurch gekennzeichnet,**
**dass** bei Fremdkühlung das Ständerblechpaket (1) mittig symmetrisch geteilt ausgeführt ist, das Kühlsystem spiegelsymmetrisch ausgeführt ist
und in der Maschinenmitte Austrittsöffnungen (26) im Gehäuse oder Gehäuserahmen (3) angeordnet sind.

8. Kühlsystem für eine hochausgenutzte hochtourige rotierende elektrische Maschine nach Anspruch 5,
**dadurch gekennzeichnet,**
**dass** in den Verschlussblechen (23) zusätzlich Öffnungen (24) oder im Querschnitt veränderbare oder verschließbare Öffnungen (24) angeordnet sind.
